# EUROPEAN PATENT SPECIFICATION

(11) **EP 2 390 742 B1**
(45) Date of publication and mention of the grant of the patent: **11.08.2021**
(21) Application number: 10164212.2
(22) Date of filing: 28.05.2010
(51) Int. Cl.: G05B 23/02

(54) **Monitoring engine usage**
Überwachungsmotorverwendung
Surveillance de l'usure d'un moteur

(43) Date of publication of application: 30.11.2011
(73) Proprietor: MTU Aero Engines AG, 80995 München (DE)
(72) Inventor: Pfoertner, Hugo, 82041, Oberhaching (DE)

(56) References cited:
- EP-A1- 0 407 179
- US-A1- 2005 246 068
- None

## Description

The invention relates to systems for monitoring the life and usage of engines, particularly aircraft engines, for supporting maintenance programmes.

In general it is not possible to measure life consumption, i.e. accumulated fatigue (life usage), exactly. The most accurate available methods determine the increase in failure probability at certain areas of fracture-critical parts as a function of the stress and temperature histories at these so-called critical areas. In the following the term "damage" is used to mean "life consumption", which is defined relative to the life potential of the part under consideration. The engine design has to take into account the expected future usage that is represented by a number of design missions and to assure that all components have sufficient strength to be operated with the required very low probability of a catastrophic failure.

The best possible assessment of life consumption ("damage") that a life-limited part in the engine will suffer by the usage of the engine requires the calculation of the stress and temperature histories at all potentially life-limiting areas of all fracture-critical parts. This either requires the implementation and (potentially very expensive) maintenance of a complete set of temperature, stress and damage algorithms in the onboard monitoring function, or a recording of the whole engine running history. Algorithms of this type are disclosed in US patents US 7197430 B2, US 7243042 B2. The main drawbacks of such systems are the non-availability of confirmed physical models in the early phase of engine operation, and the need to perform expensive updates of the mathematical models describing life consumption and corresponding software changes after introduction of engine modifications or when unforeseen life-limiting areas and/or damage mechanisms are detected after the propulsion system is in service. EP407179 discloses an aircraft health and usage monitoring system..

The invention covers a method according to claim 1, and an apparatus according to claim 4. Systems in accordance with the invention improve engine life usage by employing a set of simplified usage counters. These counters are defined such that a strong correlation between the actual life consumption at critical life-limiting areas of the propulsion system and the simplified counters is achieved. Determination of the quality of correlation can be made by Monte-Carlo simulations of the in-service usage of the propulsion system. The estimate of the remaining life can be refined by comparing the predicted life consumption expressed by the accumulation of simplified usage counts with the result of the application of the best available analytical model applied to the recorded engine parameters (i.e. the time histories of spool speeds, temperatures, inlet conditions, and so on).

Advantages of the invention include the avoidance of the need to certify a comprehensive implementation of a set of detailed life-consumption algorithms for use in a flight-worthy on-board system at too early a stage of the life of the engine. On-board processing of the full life-consumption algorithms is replaced by a data recording and storage of the time histories of selected physical parameters of the propulsion system, performed for all engines and seamlessly covering the complete operation history. This allows one to apply refinements of the life usage assessment only when required and when appropriate analytical models including in-service experience are available.

Thus, instead of expensively calculating the exact damage in the on-board monitoring function it is possible as an alternative to represent the severity of usage of the engine approximately by a number of so-called severity counters (SC). The purpose of the SCs is to address all relevant damage mechanisms in the engine. Each of the SCs expresses the severity as a function of a particular engine parameter or in some special cases as a combination of different engine parameters. The SCs are chosen to reasonably approximate the damage at those areas of life-limited parts which are assumed to be the most critical ones. There may be the possibility of monitoring the damage with the same SC in two (or more) parts of the engine. The total number will be approximately 5 to 10 SCs for the whole engine.

The following examples for SCs will explain the approach:
- Part 1 (e.g. the high-pressure turbine HPT) is assumed to be predominantly damaged by high N3 speed (and the accompanying high temperature) in combination with the time spent in this condition. This will be recorded by SC_1=f(N3). N3 is the high-pressure shaft speed.
- Part 1 (e.g. HPT) will furthermore be damaged by large cycles of the N3 speed (large ΔN3), which result in large ranges of the centrifugal forces. This will be represented by SC_2=f(N3).
- Part 2 (e.g. the high-pressure compressor HPC) will also be damaged by large cycles of the N3 speed. Therefore the same SC_2=f(N3) can be used.
- Part 2 (e.g. HPC) will be damaged beyond that by small cycles of the N3 speed (small ΔN3) occurring at high N3 speeds. This will be represented by SC_3=f(N3).

Further examples of SCs:
- SC_5=f(Torque)
- SC_6=f(NL,EGT,...)

It should be noted that the examples given for SCs are only for the purposes of explanation. The necessary number of SCs and the number of engine parameters as input into the different SCs depend on the identification of the potentially critical areas. From an overview over all critical areas those suffering the most severe damage have to be chosen together with those SCs that represent the best approximation of the applicable damage mechanism(s). This will be possible only after comprehensive investigations during the development of the engine.

As stated above, each of the SCs records the severity for its characteristic parameter(s) in a cumulative way. The severity is processed from the engine parameter(s) during the engine run. At the end of each engine run the calculated value for the severity is added to the old value of this SC before the engine run. In parallel to this the numbers of engine runs and of engine flight hours are accumulated.

For a better understanding of the invention, embodiments of it will now be described, by way of example, with reference to the accompanying drawings, in which:
- Fig. 1: shows the spread in likely damage for a given kind of mission;
- Fig. 2: shows two examples within the spread;
- Fig. 3: shows severity against accumulated engine flight time (EFH);
- Fig. 4: is a combined diagram;
- Fig. 5: shows a possible relationship between parts and counters;
- Fig. 6: shows the use of the Figure 4 diagram; and
- Fig. 7: shows the improvement obtained.

The aim of this method is to determine the damage in various life-limiting areas using the severity S as a simplified usage parameter. The method requires knowledge of the correlation between the severity S and the damage suffered D. For each type of mission (initially the design missions, later including recorded test flights) the value for the severity will be calculated.

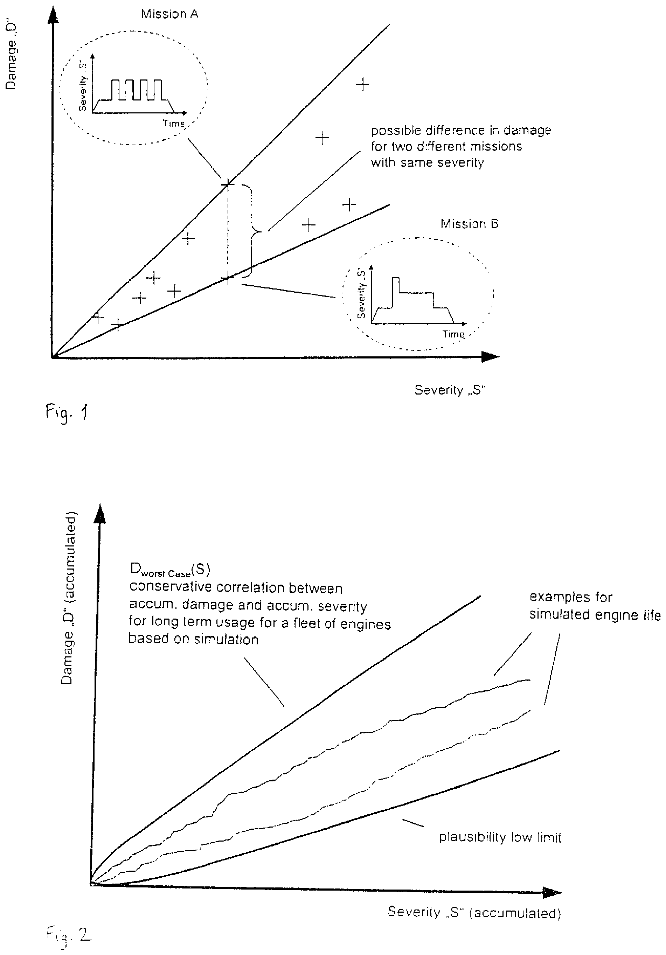

Furthermore, for each of these missions the best possible approximation of the damage values will be calculated using the comprehensive temperature and stress algorithms and damage models. This has to be performed for all SCs. Plotted in the form damage against severity, the calculated results for all missions form a distribution. **Fig. 1** gives an example of the distribution to be expected for one SC and the damage result for one particular damage mechanism. It shows the damage plotted against severity for all design missions for one SC and one particular damage mechanism (only as an example).

The diagram shows that two missions can have the same measure of severity but differ significantly in damage. This is shown as an example by the two missions A and B. For this reason the correlation between severity and damage exhibits some scatter. On the other hand it would not be reasonable always to assume for a particular severity the worst-case damage.

The task is thus to estimate for a particular severity the damage suffered in as realistic a way as possible, taking into account the averaging effects of long-term usage. This is possible by a Monte-Carlo simulation of the life of a whole fleet of engines. For each of the engines the changing usage during its life will be simulated by randomly drawing the kind and sequence of missions from the pool of design missions, using statistical methods. For each engine the severity will be calculated and the damage result for the particular damage mechanism with the best available algorithm will be calculated for all engine runs during the simulated life. This has to be performed for all SCs, all particular damage mechanisms and for all engines. **Fig. 2** gives an idea what the plot will look like when an accumulated damage result is plotted against the chosen associated accumulated severity. In **Fig. 2** this is displayed for one SC and one damage mechanism, for two engines as an example.

By means of an analytical method it is possible to calculate from the entirety of all data points of the entire engine fleet an upper limit curve. In Fig. 2 this curve is labelled D_{Worst Case}(S). The curve represents the correlation between the accumulated severity SC and the maximum value of damage that has to be assumed for a particular value of the severity SC. Because the choosing of the kind of mission and sequence of missions is done with statistical methods the "correctness" of the curve D_{WorstCase}(S) also has a particular probability. The curve will be calculated so that even outliers (engines that will be used for some time under conditions more severe than the average) will, with a given probability, not exceed the limits.

The initially steeper slope of the upper limit curve has the following reason: For small numbers of runs of an engine the analytical method has to take into account that a higher percentage of engine runs may be more severe than the long-term average. (This is analogous to the observation that 10 rolls of a die have a much higher probability to produce a sum exceeding 50 than 100 rolls will have to produce a sum exceeding 500; the long-term average slope will be 3.5/roll). Over the life of the whole fleet of engines averaging effects will dominate and the curvature of the limit curves will decrease.

The lower limit curve is the plausibility low limit (PLL). The PLL is also calculated by means of an analytical method from the entirety of all data points from the simulation. The PLL is of importance when the trend of the whole fleet is to be recalculated later on the basis of recorded running histories of all engines. In the normal case no engine should drop below the PLL. If it does, this is an indication that the recorded data need to be checked for plausibility.

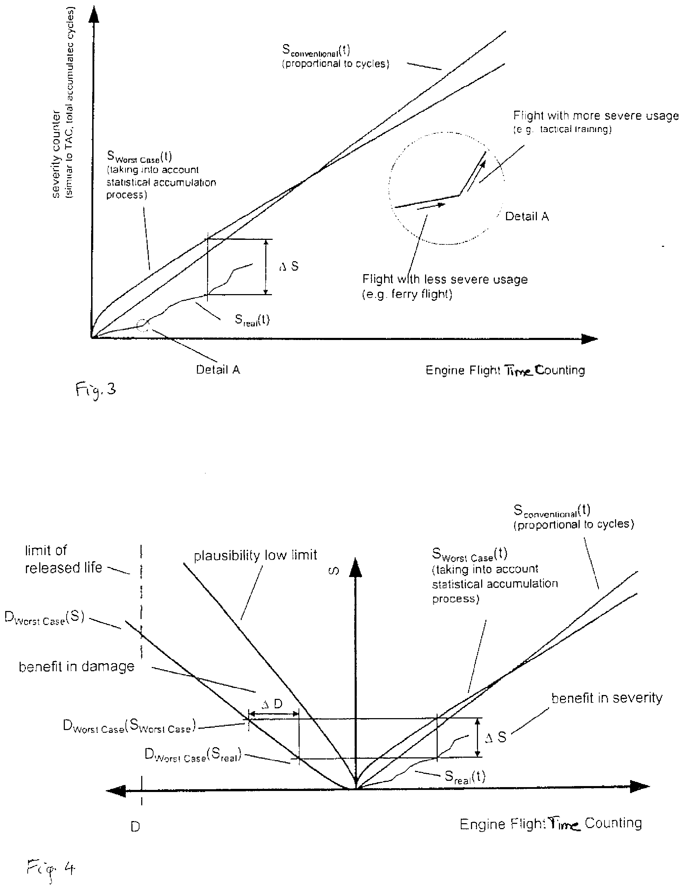

**Fig. 3** shows the correlation between engine flight hours (EFH) count (EFHC) and severity. The curve Sᵣₑₐₗ(t) gives an example for the development of a SC of an engine plotted against the EFHs. As shown in detail "A", a flight with a less severe usage results in a flatter increase, whereas a flight with a more severe usage results in a steeper increase of the curve. The curve S_{worst Case}(t) is derived from the accumulated severity and the maximum of the accumulated damage to be assumed for this situation (see Fig. 2). This curve has to be assumed if the severity is not recorded by a SC. The curvature of this curve is again a result of the statistical accumulation process over the increasing number of flights. Compared against each other the method of using an SC has a benefit which is marked in the diagram with ΔS against the curve S_{Worst Case}(t).

Also shown in the diagram is the conventional method S_{conventional}(t) which is currently in use for commercial engine applications. The correlation between EFHs and the suffered severity (and also the damage) is established by determining and using a linear relationship, the so called beta-factor. The beta-factor has to be determined in a conservative way, because this method has considerable uncertainties. With an increasing number of flights the difference as compared with the other methods regarding the accumulated severity becomes even greater.

Knowing the correlation between severity and damage it is possible to find a correlation between accumulated engine flight time and damage. **Fig. 4** again shows the correlations discussed above, i.e. the correlation between Engine Flight Hours (EFHs), severity S and damage D at a critical area in a single diagram. The right part of the diagram shows severity against EFHs and is equivalent to Fig. 3. The left part shows the diagram of Fig. 2 rotated counterclockwise by 90 degrees. Each value for severity on the curve Sᵣₑₐₗ(t) recorded by the SC correlates with a value for damage on the curve D_{Worst Case}(Sᵣₑₐₗ). Without having a SC as a proxy measure, representing the actual usage i.e. without using the present invention, the worst case for severity for a given value of EFHs has to be assumed using the curve S_{worst Case}(t). Correspondingly the worst case for damage has to be assumed using the curve D_{WorstCase}(S_{worst case}) on the left side of the diagram. As mentioned above, the method of using an SC provides a benefit in the measure of severity ΔS when compared to the assumption of the worst-case severity S_{worstCase}(t). The benefit in severity ΔS corresponds directly to a benefit in damage ΔD if projected onto the left side of the diagram. The dashed line in the diagram marks the individual limit of released or available life for each life-limited critical area.

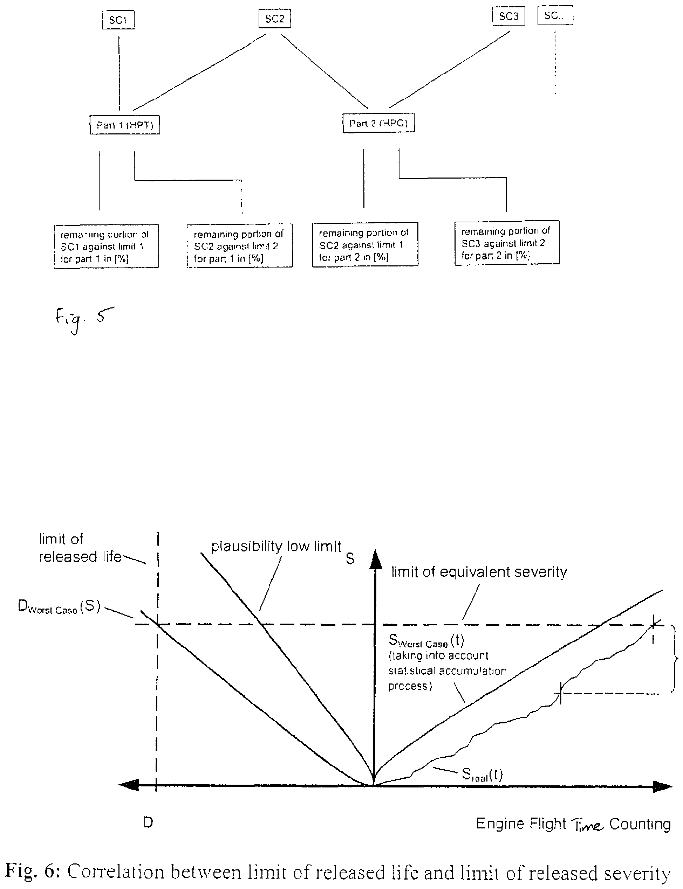

As mentioned above, the correlation between the severity counter SC and the estimated damage D has to be determined for every combination of SC and the respective life-limiting critical area. This is displayed in **Fig. 5****,** which shows the relation between severity counters, life-limited parts and particular remaining life information.

Components of the system will now be described.

### Remaining Life Information Function

This function uses the simplified life usage information provided by the severity counters. The function provides the remaining life for each combination of SC and fracture-critical part. Each of the combinations has a dedicated limit of released life (SC corresponding to a limit of released life). The function provides, for each combination, the difference between the actual value of the SC and the associated limit as the remaining portion of released life (expressed in units of the associated SC(s)).

**Fig. 6** shows the correlation between the limit of released life and the limit of released severity. This function displays on request the part/module with the lowest remaining portion of released life. A sub-menu then displays the remaining life expressed in units of severity for all parts/modules.

### This information should be available

- via the A/C maintenance display in the cockpit; and
- via the GSS (ground support station); and
- at a remote facility where the management and planning of the replacement of life-expired parts is performed.

The function is to be used by the maintenance crew after a certain number of flying hours or numbers of flights, to assess whether the engine has still sufficient remaining life, and for sortie planning.

Note: Typically the Remaining Life will decrease only very slowly because of the long-life design of the engine, and therefore it is not necessary to check the function after each flight.

### Remaining Engine Life Status Information

If the remaining life or the remaining portion of released life (life is usually released in portions, e.g. 50%, 75%, 100%) drops under a particular level a status message will be given.

Preferred order of information display:
1. Remote maintenance planning
2. Ground Support Station
3. Portable Maintenance Computer
4. Cockpit (as a last resort)

The message displayed should be available via the A/C maintenance display in the cockpit. The message displayed could read:
- Remaining Engine Life Low -

The function is used by the maintenance crew. When the status message is displayed, maintenance action will be necessary. The status message should be given well in advance so that all engines of the A/C have sufficient remaining life to continue operation until a transfer back to the MOB (main operating base) can be put on schedule. The maintenance action will depend on the maintenance concept which has been chosen for the A/C by the customer. In fact, a proper fleet management programme should prevent any unexpected appearance of this message. Different warning limits shall be applied dependent on where the "Life Low" message is displayed.

### Usage Trend Monitoring Function

This function stores the severity counters on a flight-by-flight basis. For each flight the function also stores the current value of the engine flight hour count.

The function displays the trend of the cumulated severity counters versus the engine flight hour count. The information shall be available preferred remotely for maintenance planning and/or via the GSS and should be used by the maintenance crew every N flying hours to estimate the severity of usage of the engine, where N is a number to be determined.

### Accurate Life Usage Calculation Function

This function uses the recorded, and if necessary compressed, complete running history data of the engine. The engine data are compressed in real time during the engine run (if compression is necessary), stored in the onboard system and downloaded to the GSS in intervals of a certain number of hours of engine running time. Data compression can also be performed after the uncompressed on-board recording to reduce data volume for the download. Based on the complete running history data the current set of Life Usage accounts is calculated with the best available algorithms provided by the responsible engine manufacturer or using methods compliant with engine and parts certification.

The function displays the used life, expressed in reference cycles for all fracture-critical parts and their different life-limiting critical areas.

The information would be available remotely or via the GSS and the function would only be used by authorized personnel.

The function is used at relatively long intervals only a few times during the engine life, with a spacing of several thousand hours of engine running time.

### Update Function for Remaining Life Information Function

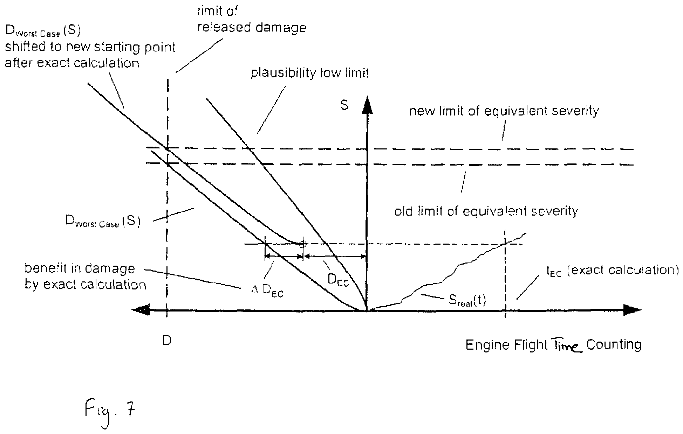

The output of the Accurate Life Usage Calculation Function is used to update the Remaining Life Information Function establishment responsible for management of life-limited parts of the engine, and optionally also on the GSS and on the aircraft. The Accurate Life Usage Calculation Function provides the best available approximation of damage values for all life-limiting areas on all fracture-critical parts. The fracture-critical parts that are monitored by the onboard system are a subset of this. Knowing the best approximation of the damage value for each of these parts it is possible to determine a new limit for the respective SC. **Fig. 7** explains how this can be achieved and shows the benefit in damage by exact calculation of damage based on historical engine running data.

Assume that the exact calculation is done at the point in time t_{EC} as displayed in Fig. 7. At this point in time the SC has a current value. Moving horizontally to the left side of the diagram, the value for severity intersects with the curve D_{Worst Case}(S). This point marks the damage which has to be assumed without having applied the detailed calculation using the specific exact life-usage algorithms. Knowing the exact damage the starting point of the curve D_{Worst Case}(S) can be shifted to that point where one coordinate is determined by the actual value for the SC and the other by the exact value of damage D_{EC}. The obtained benefit in damage or remaining life is marked with ΔD_{EC}. The shifted curve has a new intersection point with the line that marks the limit of released damage and the limit of the equivalent severity can now also be shifted to that intersection point.

The process has to be performed for each combination of SC and fracture-critical part. After the determination of the new SC limits they are transferred into the Remaining Life Information Function on the remote parts life management system GSS and on the aircraft.

Thus the invention describes an Engine Monitoring System having a Life and Usage Monitoring Function integrated to assess the remaining life of all critical engine parts and to assess the severity of usage of the engine.

The Life and Usage Monitoring Function provides:
- information on the status of the minimum remaining engine running time depending on simplified usage measures;
- information on the severity of usage of the engine; and
- accurate information on the life usage of the engine based on the complete historic running data.

## Claims

1. A method of monitoring or estimating engine life usage, comprising the steps:
a) establishing a system of Severity Counters SC, each SC being a function of one or more parameters determined for each engine run;
b) relating each SC to one or more parts of the engine to be monitored;
c) cumulating the SC count for each part of the engine as the aircraft is used; and
d) determining a maintenance event when the accumulation of SCs for any of the parts exceeds a predetermined threshold whereby one of the parameters is the high pressure shaft speed (N₃).

2. A method according to claim 1, in which the engine is an engine and the parameters include any or all of the spool speeds of all rotors, on which life limited parts are situated: N3 speed, variation (ΔN) in N3 speed, torque, N1, exhaust gas temperature, in combination with Engine Flight Time.

3. A method according to claim 1 or 2, in which after a certain number of engine runs an exact calculation of the accumulated damage is performed, and the estimated limit is recalibrated according to the result of this calculation.

4. A system for monitoring engine life usage, comprising:
a) a store for Severity Counters SC, each SC being a function of one or more parameters determined for each engine run;
b) a store for functions relating each SC to the expected remaining life of one or more parts of the engine to be monitored;
c) a means for cumulating the SC count for each part of the engine as the aircraft is used; and
d) a threshold means for initiating the required measures to inhibit operation of Life-Limited parts beyond their released lives when the accumulation of SCs for any of the parts exceeds a predetermined threshold whereby one of the parameters is the high pressure shaft speed (N₃).

5. A system according to claim 4, in which the information is relayed to the cockpit and/or remote parts life management system, the ground support system and/or a means of data display in the aircraft and/or attached to the aircraft, where attachment also includes means of wireless data communication.

6. An aircraft including a system according to claim 4 or 5.

7. A fleet management system including a system according to claim 4 or 5.

## Patentansprüche

1. Verfahren zum Überwachen oder Schätzen eines Triebwerkslebensdauerverbrauchs, das die folgenden Schritte umfasst:
a) Einrichten eines Systems von Schweregradzählern (*Severity Counters* - SC), wobei jeder SC eine Funktion eines oder mehrerer Parameter ist, die für jeden Triebwerkslauf bestimmt werden;
b) Zuordnen jedes SC zu einem oder mehreren Teilen des zu überwachenden Triebwerks;
c) Kumulieren des SC-Zählerstands fürjedes Teil des Triebwerks, während das Luftfahrzeug verwendet wird; und
d) Bestimmen eines Wartungsereignisses, wenn die Akkumulation von SCs für ein beliebiges der Teile einen zuvor bestimmten Schwellenwert überschreitet,
wobei einer der Parameter die Hochdruckwellendrehzahl (N₃) ist.

2. Verfahren nach Anspruch 1, bei dem das Triebwerk ein Triebwerk ist und die Parameter eine beliebige oder jede der Wellendrehzahlen aller Rotoren beinhalten, auf denen lebensdauerbegrenzte Teile gelegen sind: N3-Geschwindigkeit, Variation (ΔN) der N3-Geschwindigkeit, Drehmoment N1, Abgastemperatur, in Kombination mit Triebwerksflugzeit.

3. Verfahren nach Anspruch 1 oder 2, wobei nach einer bestimmten Anzahl von Triebwerksläufen eine genaue Berechnung des akkumulierten Schadens durchgeführt wird und die geschätzte Grenze gemäß dem Ergebnis dieser Berechnung neu kalibriert wird.

4. System zum Überwachen des Triebwerkslebensdauerverbrauchs, das Folgendes umfasst:
a) einen Speicher für Schweregradzähler (SC), wobei jeder SC eine Funktion eines oder mehrerer Parameter ist, die für jeden Triebwerkslauf bestimmt werden;
b) einen Speicher für Funktionen, die jeden SC zu der erwarteten verbleibenden Lebensdauereines oder mehrerer Teile des zu überwachenden Triebwerks zuordnen;
c) ein Mittel zum Kumulieren des SC-Zählstands für jedes Teil des Triebwerks, während das Luftfahrzeug verwendet wird; und
d) ein Schwellenwertmittel zum Einleiten der erforderlichen Maßnahmen, um einen Betrieb von Teilen mit begrenzter Lebensdauer über ihre freigegebene Lebensdauer hinaus zu hemmen, wenn die Akkumulation von SCs für ein beliebiges der Teile einen zuvor bestimmten Schwellenwert überschreitet,
wobei einer der Parameter die Hochdruckwellendrehzahl (N₃) ist.

5. System nach Anspruch 4, bei dem die Informationen an das Cockpit und/oder ein entferntes Teilelebensdauerverwaltungssystem, das Bodensystem und/oderein Mittel für eine Datenanzeige in dem Luftfahrzeug und/oder angebracht an dem Luftfahrzeug, weitergegeben wird, wobei eine Anbringung ebenso Mittel für eine drahtlose Datenkommunikation beinhaltet.

6. Luftfahrzeug, das ein System nach Anspruch 4 oder5 beinhaltet.

7. Flottenverwaltungssystem, das ein System nach Anspruch 4 oder 5 beinhaltet.

## Revendications

1. Procédé de surveillance ou d'estimation de la durée de vie d'un moteur, comprenant les étapes :
a) d'établissement d'un système de compteurs de gravité, SC, chaque SC étant fonction d'un ou plusieurs paramètres déterminés pour chaque instance de marche du moteur ;
b) d'association de chaque SC à une ou plusieurs pièces du moteur à surveiller ;
c) de cumul des décomptes de SC pour chaque pièce du moteur à mesure que l'aéronef est utilisé ; et
d) de détermination d'un événement de maintenance lorsque l'accumulation de SC de l'une quelconque des pièces dépasse un seuil prédéterminé
moyennant quoi l'un des paramètres est la vitesse de l'arbre haute pression (N₃).

2. Procédé selon la revendication 1, dans lequel le moteur est un moteur et les paramètres comportent l'une quelconque ou l'ensemble des vitesses de corps de l'ensemble des rotors, sur lesquels se trouvent des pièces à durée de vie limitée : vitesse N3, variation (ΔN) de la vitesse N3, couple, N1, température des gaz d'échappement, combinés au temps de vol du moteur.

3. Procédé selon la revendication 1 ou 2, dans lequel, après un certain nombre d'instances de marche du moteur, un calcul exact des dommages accumulés est effectué, et la limite estimée est réétalonnée en fonction du résultat de ce calcul.

4. Système de surveillance de la durée de vie d'un moteur, comprenant :
a) une mémoire de compteurs de gravité, SC, chaque SC étant fonction d'un ou plusieurs paramètres déterminés pour chaque instance de marche du moteur ;
b) une mémoire de fonctions associant chaque SC à la durée de vie restante attendue d'une ou plusieurs pièces du moteurà surveiller ;
c) un moyen de cumul des décomptes SC pour chaque pièce du moteur à mesure que l'aéronef est utilisé ; et
d) un moyen de seuil servant à lancer les mesures nécessaires pour empêcher l'utilisation des pièces à durée de vie limitée au-delà de la durée de vie prévue à la vente lorsque l'accumulation de SC de l'une quelconque des pièces dépasse un seuil prédéterminé
moyennant quoi l'un des paramètres est la vitesse de l'arbre haute pression (N₃).

5. Système selon la revendication 4, dans lequel les informations sont retransmises au poste de pilotage et/ou à un système de gestion de la durée de vie des pièces à distance, au système de soutien au sol et/ou à un moyen d'affichage de données dans l'aéronef et/ou attaché à l'aéronef, où l'attachement comporte également des moyens de communication de données sans fil.

6. Aéronef comportant un système selon la revendication 4 ou 5.

7. Système de gestion de flotte comportant un système selon la revendication 4 ou 5.
